# EUROPEAN PATENT SPECIFICATION

(11) **EP 1 892 406 B1**
(45) Date of publication and mention of the grant of the patent: **23.11.2011**
(21) Application number: 07016139.3
(22) Date of filing: 16.08.2007
(51) Int. Cl.: F02M 9/08

(54) **Layered scavenging carburetor**
Vergaser mit geschichteter Spülung
Carburateur de récupération stratifiée

(30) Priority: 17.08.2006 JP 2006222219; 26.04.2007 JP 2007116978; 08.08.2007 US 835849
(43) Date of publication of application: 27.02.2008
(73) Proprietor: Walbro Engine Management, L.L.C., Tucson AZ 85704 (US); Mitsubishi Heavy Industries, Ltd., Minato-ku Tokyo 108-8215 (JP)
(72) Inventor: Aihara, Tamio, Shibata-Gun, Miyagi-Pref 989-1223 (JP); Ohtsuki, Bunichi, Kakuda-City, Miyagi-Pref. 981-1514 (JP); Uenoyama, Kazuyuki, Sagamihara, Kanagawa Pref. 229-1193 (JP)
(74) Representative: Heyer, Volker

(56) References cited:
- WO-A1-2005/124120
- US-A- 4 479 510
- US-A1- 2004 251 564
- US-A1- 2006 131 763

## Description

### Field of the Invention

The present invention relates generally to carburetors, and more particularly to valves used in carburetors.

### Background of the Invention

Two-stroke internal combustion engines - such as those used in chain-saws, brushcutters, and the like - are often equipped with carburetors for mixing and supplying air and fuel to the engine. Layered scavenging carburetor arrangements having separate air-fuel passages and air passages can be used to reduce, and often prevent, undesirable blow-through and fuel-loss through its exhaust (see e.g. US 2004/025164 A1). But sometimes these arrangements generate air and fuel mixtures that are too lean for an idle operating condition or other low speed and low load conditions.

### Summary of the Invention

The invention is defined by the features of claim 1. Preferred features are defined in the dependent claims.

### Brief Description of the Drawings

The following detailed description of preferred embodiments and best mode will be set forth with reference to the accompanying drawings, in which:

FIG. 1 is a sectional view of a carburetor showing a first embodiment of a valve;

FIG. 2 is a perspective view of the valve of FIG.1;

FIG. 3A is a sectional view taken along line 3-3 in FIG. 1 of an air valve, and FIG. 3B is a phantom plan view of a throttle valve, showing the relative positions of both valves when they are fully closed;

FIGS. 4A and 4B are views similar to FIGS. 3A and 3B showing the relative positions of the valves when they are moved toward open;

FIGS. 5A and 5B are views similar to FIGS. 3A and 3B showing the relative positions of the valves when they are moved halfway toward fully open;

FIGS. 6A and 6B are views similar to FIGS. 3A and 3B showing the relative positions of the valves when they are fully open;

FIG. 7A is a sectional view of an air valve used in a second embodiment of a valve, and FIG. 7B is a phantom plan view of a throttle valve, showing the relative positions of both valves when they are moved halfway toward fully open;

FIG. 8 is a side view of a baffle used in an air valve in a third embodiment of a valve;

FIG. 9 is a side view of a baffle used in an air valve in a fourth embodiment of a valve;

FIG. 10 is an exploded perspective view of a fifth embodiment of a valve;

FIG. 11 is a fragmentary sectional view of a sixth embodiment of a valve;

FIG. 12 is a side view of a linkage used with a valve; and

FIG. 13 is a sectional side view of a baffle used in an air valve in a seventh embodiment of a valve.

### Detailed Description of Preferred Embodiments

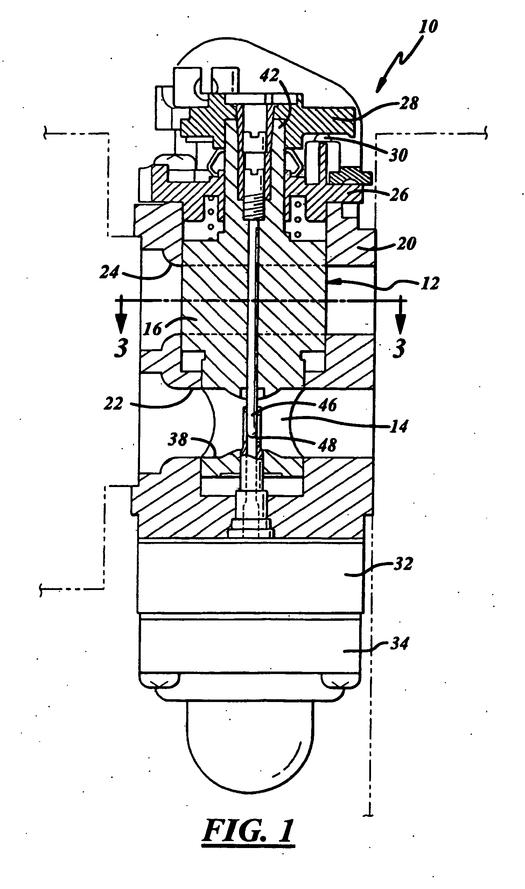

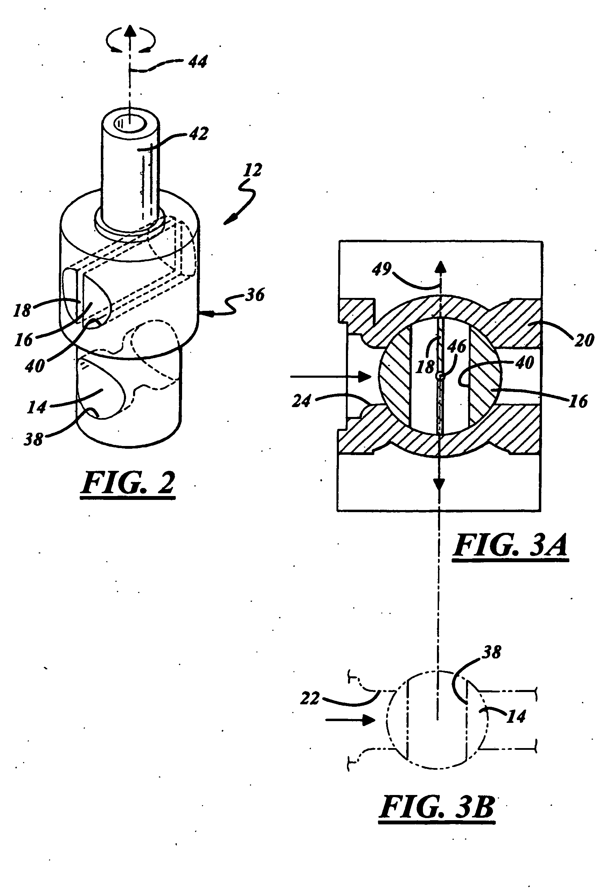

Referring in more detail to the drawings, FIG. 1 shows a carburetor 10 that can be used in small two-stroke internal combustion engines like those found in chain saws, brushcutters, and the like. The carburetor 10 includes a valve 12 having a throttle valve 14 to regulate air and fuel flow, and an air valve 16 to regulate scavenging airflow. A baffle 18 (FIG. 2) is disposed in the air valve 16 to impede airflow through the air valve 16 to thus prevent air and fuel mixtures delivered from the carburetor 10 from becoming too lean at idle or other low speed and low load operating conditions of the associated internal combustion engine.

The carburetor 10 can, among other things, mix and supply air and fuel to the internal combustion engine. The carburetor 10 can come in other types not shown including a bowl or diaphragm type. As shown, the carburetor 10 has a layered scavenging arrangement that, as mentioned, includes the throttle valve 14 and the air valve 16. A carburetor body 20 supports and carries the valve 12, and defines an air-fuel passage 22 that communicates with the throttle valve 14 and the internal combustion engine, and also defines an air passage 24 which communicates with the air valve 16 and the internal combustion engine. A lid 26 may cover and retain the valve 12 once the valve is placed in the carburetor body 20. A lever 28 fixed to the valve 12 can rotate, in cooperation with a cam mechanism 30, to axially and rotatably adjust the position of the valve 12 and thereby adjust the air and fuel mixture supplied to the internal combustion engine. As shown, the carburetor 10 may further include a fuel control chamber 32 that can provide fuel to the valve 12, and an atmosphere chamber 34 that is diaphragmed to the fuel control chamber 32 to keep a constant supply pressure to the fuel. Skilled artisans will know the further components, and general construction, arrangement, and operation of these types of carburetors so that a more complete description will not be given here.

### First Embodiment of Valve

The valve 12 regulates fluid-flow through the carburetor 10 and to the associated internal combustion engine by permitting flow when the valve is open, preventing or substantially restricting flow when it is closed, and permitting partial flow therebetween. Referring to FIG. 2, in this embodiment a valve body 36 may be constructed out of one-piece, or composed of multiple pieces. The throttle valve 14 may be formed in a lower, smaller-diameter portion of the valve body 36, and the air valve 16 may be formed in an upper, larger-diameter portion of the valve body. The different valves each have a generally cylindrical shape that each define a center axis that may be parallel to each other. As shown here, both the throttle valve 14 and the air valve 16 are of the rotary type and thus are rotated to open and closed positions. The throttle valve 14 and the air valve 16 permit fluid-flow when the valves are open, prevent or substantially restrict flow when the valves are closed, or permit partial flow therebetween. The throttle valve 14 defines an air-fuel bore 38 through which fluid may flow, and the air valve 16 defines an air bore 40 through which fluid may flow. In general, the throttle valve 14 may include a venturi or restricted diameter throat which generates a drop in pressure and thus a greater vacuum through the throttle valve.

The valve body 36 may also form a valve shaft 42 that may lie concentric with a center axis 44 of the cylindrical valve body 36. The valve body 36 may rotate about the center axis 44. Referring back to FIG. 1, a metering needle valve 46 extends through the valve shaft 42 and through a center of the baffle 18 (FIG. 3A) and has a free end slidingly received in a fuel nozzle 48 exposed within the throttle valve 14. The decreased pressure generated by the venturi and the internal combustion engine causes fuel to flow out of the fuel control chamber 32 and the fuel nozzle 48 as is known by skilled artisans.

The baffle 18 is disposed in the air valve 16 to partially separate at least one section of the air bore 40 from another section. As will be subsequently described, in this way the baffle 18 impedes airflow through the air bore 40 during at least some positions of the air valve 16. Referring to FIGS. 2 and 3A, in the first embodiment, the baffle 18 is a solid rectangular plate. The baffle 18 can be constructed of a metal such as aluminum or steel, a plastic, a polymer, a composite material, or any other suitable material. The baffle 18 can be made unitary with the valve body 36, or can be a separate piece fixed in the air valve 16. The baffle 18 can be oriented parallel to and cut through the center axis 44. As best shown in FIG. 3A, the baffle 18 is coextensive with the air bore 40 and lies axially along a center axis 49 of the air bore 40. As a result, the baffle 18 divides the air bore 40 into two equal sections.

During the initial opening movement of the throttle valve 14, airflow through the air valve 16 is impeded, and consequently the air and fuel mixture provided to the internal combustion engine is richer than it would be without the baffle 18. In the first embodiment, the baffle 18 impedes airflow through the air bore 40 by obstructing, or blocking completely, the airflow up until the throttle valve 14 and the air valve 16 are about halfway toward their fully open positions. Figures 3A-6B show the sequential synchronized movements of the throttle valve 14 and the air valve 16 as the valves move from their fully closed positions to their fully opened positions. In these figures, the unmarked arrows represent the respective fluid-flows.

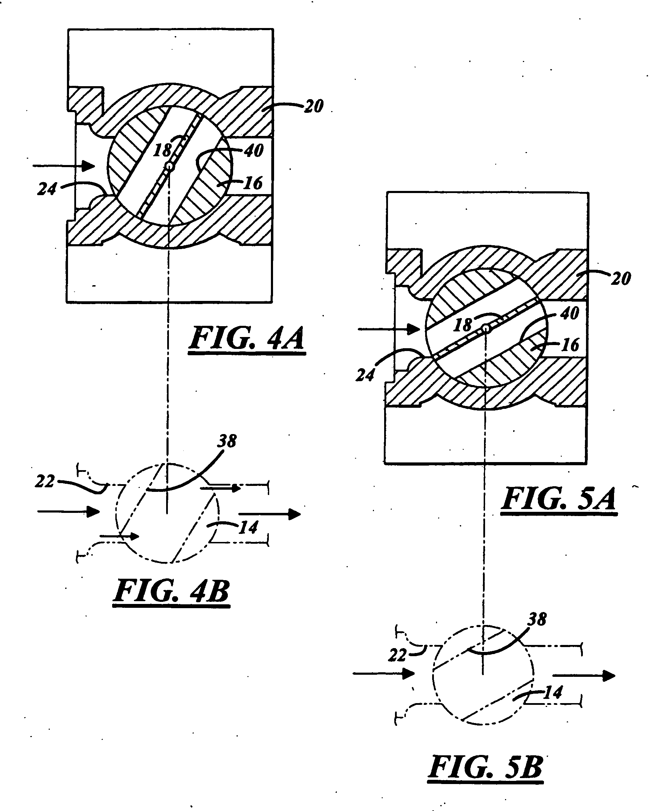

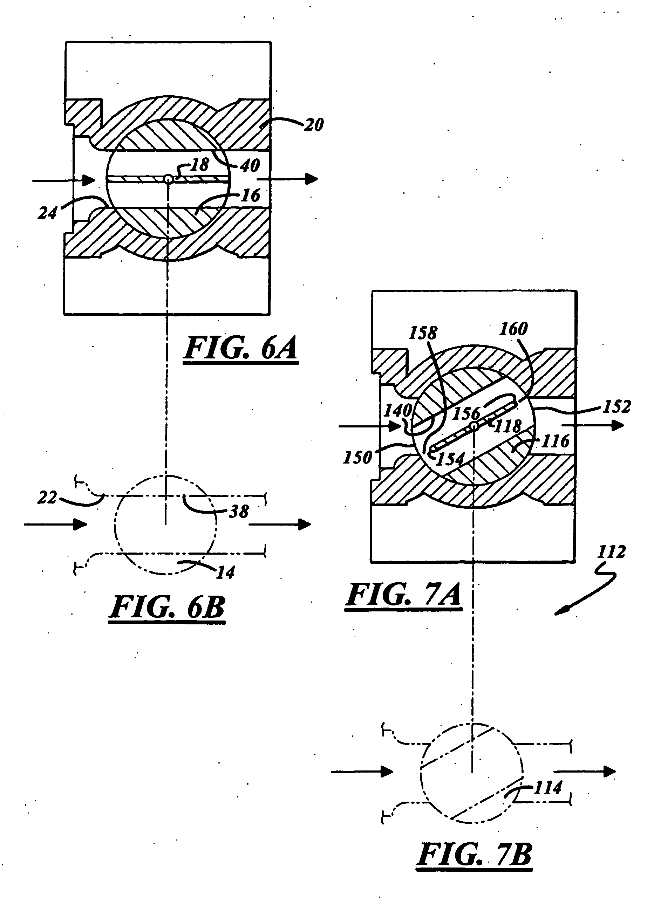

Figures 3A and 3B show the valves 14, 16 in a fully closed position where no or little air or fuel flows through the throttle valve 14, and no or little air flows through the air valve 16. In this position, the internal combustion engine can be turned off. Figures 4A and 4B show the throttle valve 14 slightly open where some air and fuel mixture exits the throttle valve and flows to the internal combustion engine; while the air valve 16 is still closed and little or no airflow passes therethrough. In this position, the internal combustion engine can be in an idle operating condition, or other low speed and low load condition. Figures 5A and 5B show the throttle valve 14 about halfway towards its fully open position allowing air and fuel mixture to flow therethrough; while the air valve 16 is also about halfway towards its fully opened position but does not allow airflow therethrough. In this position, the baffle 18 extends across one side of the air passage 24 to the other side and hence obstructs, or substantially completely blocks, any airflow that might otherwise pass therethrough. Only fluid-flow through the throttle valve 14 reaches the internal combustion engine. In this position, the internal combustion engine can be in a low speed and low load condition. Just beyond the halfway position, the baffle 18 may retard airflow through the air bore 40 by providing a reduced flow area or gap defined between the baffle and the air passage 24. Figures 6A and 6B show the throttle valve 14 in its fully open position and the air valve 16 in its fully open position. The internal combustion engine is in a wide-open throttle operating condition with fluid-flow passing through the throttle valve 14 and the air valve 16 virtually unimpeded.

### Second Embodiment of Valve

Figures 7A and 7B show a second embodiment of a valve 112. This embodiment is similar to the first embodiment in many respects, and the similarities will not be repeated here. One difference is a baffle 118. The baffle 118 is fixed in an air valve 116 and in an air bore 140. The air bore 140 extends axially from a first end 150 to a second end 152, and the baffle 118 extends from a first end 154 to a second end 156. In this embodiment, the baffle 118 is not coextensive with the air bore 140. Instead, the first end 154 and the second end 156 of the baffle 118 are located within and away from the first end 150 and the second end 152 of the air bore 140, leaving voids such as a first gap 158 defined by the respective first ends, and a second gap 160 defined by the respective second ends. The baffle 118 may still lie along a center axis of the air bore 140 and may divide it into two equal sections or may be positioned otherwise as desired.

When in use, the baffle 118 impedes airflow through the air bore 140 by retarding, or slowing the airflow when a throttle valve 114 and the air valve 116 are about halfway toward their fully open positions as shown in FIGS. 7A and 7B. This position is just one example. The baffle 118 will retard airflow through the air bore 140 when the flow area between the air valve 116 and the air passage is greater than the flow area defined by the first and second gaps 158 and 160. Air passes through the air valve 116 with some air flowing around and through the first gap 158 and the second gap 160. In the position shown, the baffle 118 may retard airflow by partly extending across the air bore 140 and interrupting what would otherwise be a more direct fluid-flow path and reducing the airflow area. In a similar way, the baffle 118 retards airflow before and beyond the halfway position.

### Third Embodiment of Valve

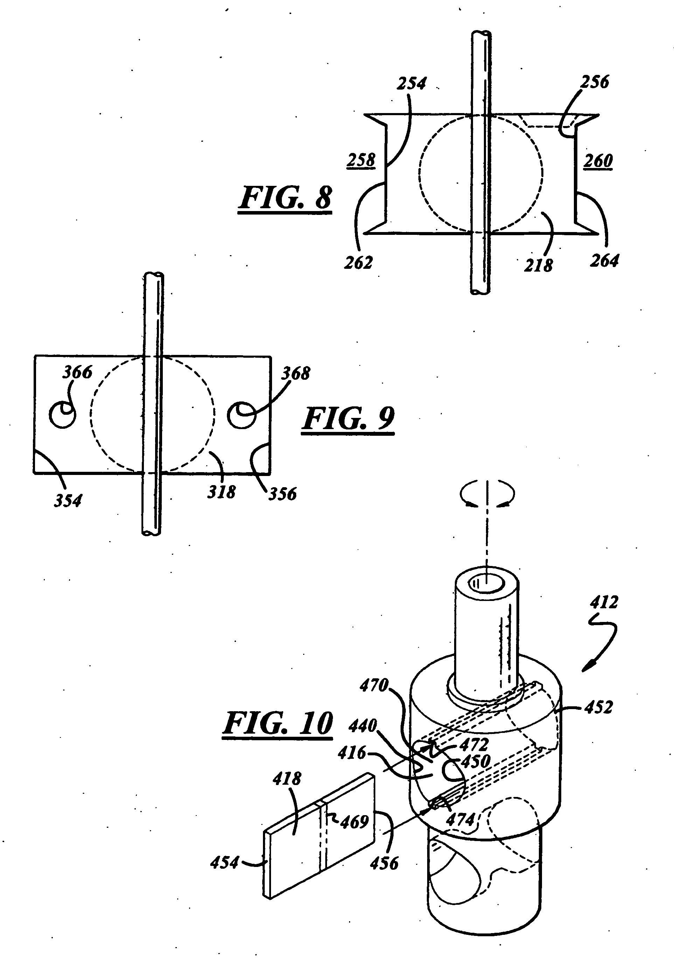

Figure 8 shows a third embodiment of a valve. This embodiment is similar to the first embodiment in many respects, and the similarities will not be repeated here. One difference is a baffle 218. Although not shown, the baffle 218 is fixed in an air valve in an air bore that extends from a first end to a second end. The baffle 218 extends from a first end 254 to a second end 256. In this embodiment, the baffle 218 may define one or more voids or cutouts in its periphery. For example, a first cutout 262 may be carved in the first end 254 and a second cutout 264 may be carved in the second end 256; as shown by phantom, other cutouts may be carved on other sides of the baffle 218. Without the first and second cutouts 262 and 264, the baffle 218 would be coextensive with the first and second end of the air bore. The cutouts themselves can also take numerous shapes and sizes other than the ones shown. The first and second cutouts 262 and 264 respectively define a first gap 258 and a second gap 260 with the air bore similar to how the gaps of the second embodiment were defined. The baffle 218 may still lie along a center axis of the air bore and may still divide it into two equal sections, or may be positioned otherwise as desired.

When in use, the baffle 218 impedes airflow through the air bore by retarding, or slowing, the airflow when the throttle valve and the air valve are in certain positions. For example, when the air valve initially opens, i.e., when a flow area or gap develops between the air valve and an associated air passage, airflow may pass through that flow area and through the first and second gaps 258 and 260. As another example, the baffle 218 will retard airflow through the air bore when the flow area between the air valve and the air passage is greater than the flow area defined by the first and second gaps 258 and 260. In these examples, the baffle 218 retards airflow by extending across the air bore to interrupt what would otherwise be a more direct fluid-flow path and reducing the airflow area.

### Fourth Embodiment of Valve

Figure 9 shows a fourth embodiment of a valve. This embodiment is similar to the first embodiment in many respects and the similarities will not be repeated here. One difference is a baffle 318. Although not shown, the baffle 318 is fixed in an air valve, in an air bore that extends from a first end to a second end. The baffle 318 may be coextensive with the air bore and extend from a first end 354 to a second end 356. The baffle 318 may define one or more voids or openings extending through its body and being bounded at least partially, and in some embodiments completely by its body. The openings may take numerous shapes, sizes, and locations in the baffle 318. For example, as shown, a first circular opening 366 may be defined adjacent the first end 354, and a second circular opening 368 may be defined adjacent the second end 356. The baffle 318 may still lie along a center axis of the air bore and may divide the air bore into two equal sections, or may be positioned otherwise as desired.

When in use, the baffle 318 impedes airflow through the air bore by retarding, or slowing, the airflow when the throttle valve and the air valve are in certain positions. For example, when the air valve initially opens, i.e., when a flow area or gap develops between the air valve and an associated air passage, airflow may pass through that flow area and through the first and second openings 366 and 368. As another example, the baffle 318 will retard airflow through the air bore when the flow area between the air valve and the air passage is greater than the flow area defined by the first and second openings 366 and 368. In these examples, the baffle 318 retards airflow by extending across the air bore and interrupting what would otherwise be a more direct fluid-flow path and reducing the airflow area.

### Fifth Embodiment of Valve

Figure 10 shows a fifth embodiment of a valve. This embodiment is similar to the first embodiment in many respects, and the similarities will not be repeated here. One difference is an air bore 440. A baffle 418 is disposed in an air valve 416 and particularly in the air bore 440. The air bore 440 may have a generally cylindrical shape that extends from a first end 450 to a second end 452. The baffle 418 may be coextensive with the air bore 440 and can extend from a first end 454 to a second end 456. In this embodiment, the baffle 418 is sized larger in a radial direction with respect to the air bore 440 and may have a slot 469 (in phantom) extending radially (with respect to the air bore) through its body to receive a needle valve. The slot may be present in other embodiments. The air bore 440 has a cylindrical wall 470 defining a first groove 472 channeled in the wall 470 on one side, and defining a second groove 474 channeled in the wall on an opposite side. The first groove 472 and the second groove 474 outfit the air bore 440 for a press-fit with the baffle 418 to thereby fix the baffle in the air bore. The grooves are accordingly sized and shaped to receive the respective sides and edges of the baffle 418. The grooves extend axially from the first end 150 and to the second end 152 of the air bore 440, and protrude radially beyond the wall 470. In other embodiments not shown, only a single groove may be present in the air bore 440.

### Sixth Embodiment of Valve

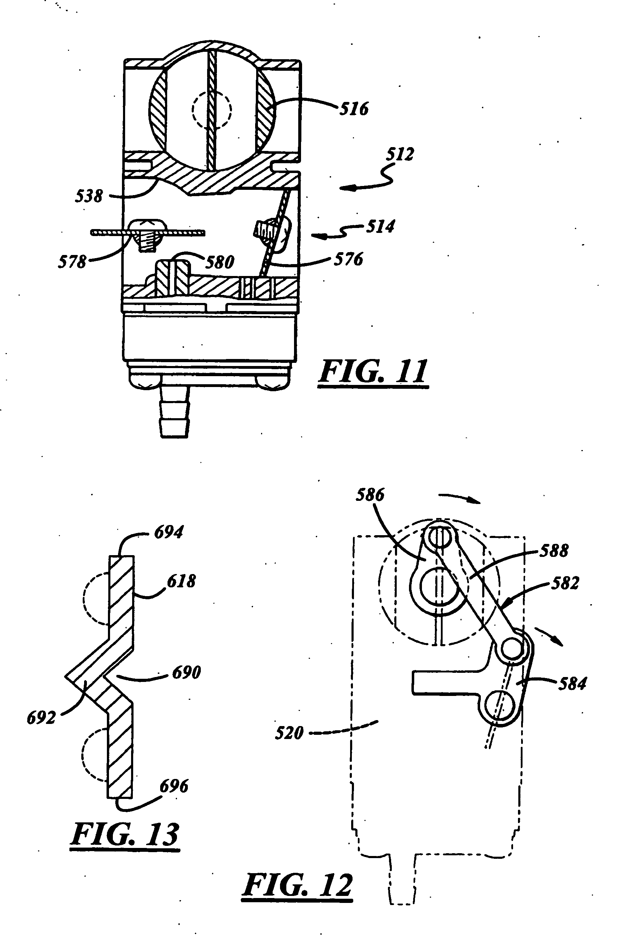

Figure 11 shows a sixth embodiment of a valve. This embodiment is similar to the first embodiment in some respects, and the similarities will not be repeated here. One difference is a throttle valve 514. The throttle valve 514 may include a butterfly valve 576 and a fuel-injection nozzle or jet 580. The valve may also include a choke valve 578. Together, these components regulate air-fuel flow to the internal combustion engine as will be known to skilled artisans. The valves may be circular plates that are attached to and rotated by respective shafts. When rotated perpendicular with respect to a center axis of an air-fuel bore 538, the butterfly and choke valve 576 and 578 prevent or restrict fluid-flow therethrough; and when rotated parallel to the center axis of the air-fuel bore 538, the butterfly and choke valve 576 and 578 permit fluid-flow therethrough. An air valve 516 may be a rotary valve.

Referring to FIG. 12, this embodiment may include a linkage 582 that operably connects the shafts of the throttle valve 514 and the air valve 516 to substantially synchronize the movements of the valves. In other words, the opening or closing of the throttle valve 514 translates into concurrent respective opening or closing of the air valve 516. The linkage 582 may be equipped outside of a carburetor body 520, or outside of the valve body (not shown). The linkage 582 may comprise a first lever 584 connected to the shaft of the throttle valve 514, a second lever 586 connected to the shaft of the air valve 516, and a link rod 588 pivoted to and connecting the first and second levers. The levers and link rod work together to provide the above-mentioned synchronized movement.

### Seventh Embodiment of Valve

Figure 13 shows a seventh embodiment of a valve. This embodiment is similar to the first embodiment in some respects, and the similarities will not be repeated here. One difference is a baffle 618. Although not shown, the baffle 618 is fixed in an air valve in an air bore. The baffle 618 may but need not be coextensive with the air bore, and may have one or more voids 690 formed in the baffle 618. The one or more voids may come in various numbers, locations, shapes and sizes to form a break in continuity as compared to a uniform baffle. For example, there may be a single void 690 as shown defined at least in part by a bend or ridge 692 in the baffle 618. In other embodiments, for example, the void may make or be formed by a bend, bulge or other shape, and there may be one or more of them as shown in phantom. The single void 690 may extend lengthwise across the entire baffle 618. The void 690 may be parallel with the top and bottom edges 694, 696 of the baffle 618, or could be oriented on an angle with respect to the edges.

When in use, the baffle 618 impedes airflow through the air bore by retarding, or slowing, the airflow when the throttle valve and the air valve are in certain positions. For example, when the air valve initially opens, i.e., when a flow area or gap develops between the air valve and an associated air passage, airflow may pass through the void 690. The ridge 692 and the void 690 breach the air passage before the rest of the otherwise planar baffle 618 when the air valve is opening to enable airflow therethrough. In this example, the baffle 618 retards airflow by extending across the air bore and interrupting what would otherwise be a more direct fluid-flow path and reducing the airflow area.

Although not particularly described, subject matter of each of the several embodiments can be used with each other. For example, a baffle may define one or more cutouts and be press-fit into grooves defined in an air bore. Likewise, a single baffle can define one or more openings and one or more cutouts, and still retard airflow through an air bore. Also, an air valve having a baffle defining one or more cutouts can be used with a throttle valve comprising a butterfly valve.

Furthermore, the described baffles need not divide the air bore into equal sections nor lie axially along the center axis of the air bore. Indeed, the baffle can be oriented at different angles with respect to the center axis the air bore; for example, the baffle can be rotated or pivoted about the needle valve when viewed in plan as in FIG. 3A, or can be rotated or pivoted in another view about an axis perpendicular to the needle valve. In both examples, and others, the baffle may still interrupt an otherwise more direct fluid-flow path and thus impede airflow through the air bore.

In at least the embodiments comprising the rotary throttle valve and the rotary air valve, the valve body may be constructed with the valves being oriented generally parallel and stacked one on top of the other whereby a single and simultaneous rotation about the valve shaft can open and close both valves. In some cases, such a construction may simplify manufacturing and operation. The baffle, in part, enables this construction by impeding airflow through the air valve when excessive air is undesirable.

While the forms of the invention herein disclosed constitute presently pre ferred embodiments, many others are possible. It is not intended herein to mention all the possible equivalent forms of the invention. It is understood that the terms used herein are merely descriptive, rather than limiting, and that various changes may be made without departing from the scope of the appending claims.

## Claims

1. A carburetor (10) with a body (20) having an air-fuel passage (22), a separate air passage (24) and a valve (12; 112; 412; 512), the valve (12; 112; 412; 512) comprising:
a throttle valve (14; 514) in the air-fuel passage (22) to regulate air and fuel flow to an engine; and
a rotatable air valve (16; 116; 416; 516) in the separate air passage (24) to regulate air flow to the engine and having an air bore (40; 140; 440) within the rotatable air valve (16; 116; 416; 516) **characterized by**
having a baffle (18; 118; 218; 318; 418; 618) disposed within the air bore (40; 140; 440) to separate one section of the air bore (40; 140; 440) from another section of the air bore (40; 140; 440), wherein in at least some rotary positions of the air valve (16; 116; 416; 516) the baffle (18; 118; 218; 318; 418; 618) impedes airflow through the air bore (40; 140; 440) and the air passage (24) of the carburetor body (20).

2. The carburetor (10) of claim 1 wherein the throttle valve (14; 514) is a rotary valve (14), and wherein both valves (14, 16; 116; 416) constitute part of a valve body (36) which rotates about a center axis (44) and which also includes a valve shaft (42).

3. The carburetor (10) of claim 2 further comprising a needle valve (46) of the carburetor (10) disposed in the valve shaft (42) and having a free end slidingly received in a fuel nozzle (48) within the throttle valve (14).

4. The carburetor (10) of claim 1 wherein the baffle (18; 118; 218; 318; 418; 618) i) is coextensive with the air bore (40; 140; 440), ii) lies axially along a center axis (49) of the air bore (40; 140; 440), iii) is a solid plate, iv) divides the air bore (40; 140; 440) into equal sections, and wherein in at least some rotary positions of the air valve (16; 116; 416; 516) the baffle (18; 118; 218; 318; 418; 618) obstructs airflow through the air bore (40; 140; 440).

5. The carburetor (10) of claim 1 wherein the air bore (140) has a first end (150), and the baffle (118) has a first end (154) that is spaced within and away from the first end (150) of the air bore (140) to form a first gap (158), and wherein in at least some rotary positions of the air valve (116) the baffle (118) retards airflow through the air bore (140) by enabling airflow through the first gap (158).

6. The carburetor (10) of claim 1 wherein the baffle (218) defines one or more cutouts (262, 264) in the periphery of the baffle (218), and wherein, in at least some rotary positions of the air valve (16; 116; 416; 516) the baffle (218) retards airflow through the air bore (40; 140; 440) by enabling airflow through the one or more cutouts (262, 264).

7. The carburetor (10) of claim 6 wherein the baffle (218) has a first end (254) defining a first cutout (262), and a second end (256) located opposite the first end (254) defining a second cutout (264).

8. The carburetor (10) of claim 1 wherein the baffle (318) defines one or more openings (366, 368) through the baffle (318) and that are bounded by the baffle (318), and wherein in at least some rotary positions of the air valve (16; 116; 416; 516) the baffle (318) retards airflow through the air bore (40; 140; 440) by enabling airflow through the one or more openings (366, 368).

9. The carburetor (10) of claim 1 wherein the baffle (618) has one or more voids (690) formed in the baffle (618), and wherein in at least some rotary positions of the air valve (16; 116; 416; 516) the baffle (618) retards airflow through the air bore (40; 140; 440) by enabling airflow through the one or more voids (690).

10. The carburetor (10) of claim 1 further comprising at least one groove (472, 474) formed in the air bore (440) in the air valve (416) and wherein the baffle (418) is received in the at least one groove (472, 474) to be disposed in the air bore (440).

## Patentansprüche

1. Ein Vergaser (10) mit einem Körper (20), der einen Luft-Kraftstoff Durchlass (22), einen getrennten Luftdurchlass (24) sowie ein Ventil (12; 112; 412; 512) aufweist, wobei das Ventil (12; 112; 412; 512) umfasst:
ein Drosselventil (14; 514) im Luft-Kraftstoff Durchlass (22), um einen Luft und Kraftstoffstrom zu einem Motor zu regulieren; und
ein drehbares Luftventil (16; 116; 416; 516) im getrennten Luftdurchlass (24), um einen Luftstrom zu dem Motor zu regulieren, und das ein Luftbohrloch (40; 140; 440) innerhalb des drehbaren Luftventils (16; 116; 416; 516) aufweist,
**gekennzeichnet durch**
eine Prallfläche (18; 118; 218; 318; 418; 618), die innerhalb des Luftbohrlochs (40; 140; 440) angeordnet ist, um einen Abschnitt des Luftbohrlochs (40; 140; 440) von einem anderen Abschnitt des Luftbohrlochs (40; 140; 440) zu trennen, wobei in mindestens einigen Drehpositionen des Luftventils (16; 116; 416; 516) die Prallfläche (18; 118; 218; 318; 418; 618) einen Luftstrom **durch** das Luftbohrloch (40; 140; 440) und den Luftdurchlass (24) des Vergaserkörpers (20) behindert.

2. Der Vergaser (10) gemäß Patentanspruch 1, wobei das Drosselventil (14; 514) ein Drehventil (14) ist, und wobei beide Ventile (14, 16; 116; 416) einen Teil eines Ventilkörpers (36) begründen, der um eine Mittelachse (44) dreht und der ebenso einen Ventilschaft (42) umfasst.

3. Der Vergaser (10) gemäß Patentanspruch 2, der weiterhin ein Nadelventil (46) des Vergaser (10) aufweist, das im Ventilschaft (42) angeordnet ist und ein freies Ende aufweist, das gleitend in einer Kraftstoffdüse (48) innerhalb des Drosselventils (14) aufgenommen ist.

4. Der Vergaser (10) gemäß Patentanspruch 1, wobei die Prallfläche (18; 118; 218; 318; 418; 618) i) flächengleich mit dem Luftbohrloch (40; 140; 440) ist, ii) axial entlang einer Mittelachse (49) des Luftbohrlochs (40; 140; 440) liegt, iii) eine feste Platte ist, iv) das Luftbohrloch (40; 140; 440) in gleiche Abschnitte teilt, und wobei in mindestens einigen Drehpositionen des Luftventils (16; 116; 416; 516) die Prallfläche (18; 118; 218; 318; 418; 618) einen Luftstrom durch das Luftbohrloch (40; 140; 440) versperrt.

5. Der Vergaser (10) gemäß Patentanspruch 1, wobei das Luftbohrloch (140) ein erstes Ende (150) aufweist, und die Prallfläche (118) weist ein erstes Ende (154) auf, das beabstandet ist innerhalb und weg von dem ersten Ende (150) des Luftbohrlochs (140), um einen ersten Spalt (158) zu bilden, und wobei in mindestens einigen Drehpositionen des Luftventils (116) die Prallfläche (118) einen Luftstrom durch das Luftbohrloch (140) verzögert durch ermöglichen eines Luftstroms durch den ersten Spalt (158).

6. Der Vergaser (10) gemäß Patentanspruch 1, wobei die Prallfläche (218) einen oder mehrere Ausschnitte (262, 264) im Umfang der Prallfläche (218) definiert, und wobei, mindestens in einigen Drehpositionen des Luftventils (16; 116; 416; 516), die Prallfläche (218) einen Luftstrom durch das Luftbohrloch (40; 140; 440) verzögert durch ermöglichen eines Luftstroms durch den einen oder die mehreren Ausschnitte (262, 264).

7. Der Vergaser (10) gemäß Patentanspruch 6, wobei die Prallfläche (218) ein erstes Ende (254), das eine ersten Ausschnitt (262) definiert, und ein zweites Ende (256) aufweist, das entgegengesetzte dem ersten Ende (254) angeordnet ist und das einen zweiten Ausschnitt (264) definiert.

8. Der Vergaser (10) gemäß Patentanspruch 1, wobei die Prallfläche (318) eine oder mehrere Öffnungen (366, 368) durch die Prallfläche (318) definiert und die durch die Prallfläche (318) begrenzt sind, und wobei in mindestens einigen Drehpositionen des Luftventils (16; 116; 416; 516) die Prallfläche (318) einen Luftstrom durch das Luftbohrloch (40; 140; 440) verzögert durch ermöglichen eines Luftstroms durch die eine oder die mehreren Öffnungen (366, 368).

9. Der Vergaser (10) gemäß Patentanspruch 1, wobei die Prallfläche (618) einen oder mehrere Hohlräume (690) aufweist, die in der Prallfläche (618) gebildet sind, und wobei in mindestens einigen Drehpositionen des Luftventils (16; 116; 416; 516) die Prallfläche (618) einen Luftstrom durch das Luftbohrloch (40; 140; 440) verzögert durch ermöglichen eines Luftstroms durch den einen oder die mehreren Hohlräume (690).

10. Der Vergaser (10) gemäß Patentanspruch 1, der weiterhin mindestens eine Rille (472, 474) aufweist, die in dem Luftbohrloch (440) im Luftventil (416) gebildet ist, und wobei die Prallfläche (418) in der mindestens einen Rille (472, 474) aufgenommen ist, um im Luftbohrloch (440) angeordnet zu sein.

## Revendications

1. Carburateur (10) comprenant un corps (20) ayant un passage air/carburant(22), un passage d'air séparé (24) et une soupape (12 ; 112 ; 412 ; 512), la soupape (12 ; 112 ; 412 ; 512) comprenant :
un papillon des gaz (14 ; 514) dans le passage air/carburant (22) pour réguler le débit d'air et de carburant vers un moteur ; et
une soupape à air rotative (16 ; 116 ; 416 ; 516) dans le passage d'air séparé (24) pour réguler le débit d'air vers le moteur et comprenant un alésage d'air (40 ; 140 ; 440) à l'intérieur de la soupape à air rotative (16 ; 116 ; 416 ; 516), **caractérisée en ce qu'**elle
comprend un déflecteur (18 ; 118 ; 218 ; 318 ; 418 ; 618) placé à l'intérieur de l'alésage d'air (40 ; 140 ; 440) pour séparer une section de l'alésage d'air (40 ; 140 ; 440) d'une autre section de l'alésage d'air (40 ; 140 ; 440) dans lequel, dans au moins certaines positions rotatives de la soupape à air (16 ; 116 ; 416 ; 516), le déflecteur (18 ; 118 ; 218 ; 318 ; 418) entrave le débit d'air à travers l'alésage d'air (40 ; 140 ; 440) et le passage d'air (24) du corps de carburateur (20).

2. Carburateur (10) selon la revendication 1, dans lequel le papillon des gaz (14 ; 514) est une soupape rotative (14), et dans lequel les deux soupapes (14, 16 ; 116 ; 416) font partie d'un corps de soupape (36) qui tourne autour d'un axe central (44) et qui comprend également une tige de soupape (42).

3. Carburateur (10) selon la revendication 2, comprenant en outre un pointeau (46) du carburateur (10) placé dans la tige de soupape (42) et présentant une extrémité libre logée de manière coulissante dans un injecteur de carburant (48) à l'intérieur du papillon des gaz (14).

4. Carburateur (10) selon la revendication 1, dans lequel le déflecteur (18 ; 118 ; 218 ; 318 ; 418 ; 618)i) est co-étendu avec l'alésage d'air (40 ; 140 ; 440), ii) repose axialement le long d'un axe central (49) de l'alésage d'air (40 ; 140 ; 440), iii) est une plaque solide, iv) divise l'alésage d'air (40 ; 140 ; 440) en sections égales, et dans lequel, dans au moins certaines positions rotatives de la soupape à air (16 ; 116 ; 416 ; 516), le déflecteur (18 ; 118 ; 218 ; 318 ; 418 ; 618) obstrue le débit d'air à travers l'alésage d'air (40 ; 140 ; 440).

5. Carburateur (10) selon la revendication 1, dans lequel l'alésage d'air (140) présente une première extrémité (150), et le déflecteur (118) présente une première extrémité (154) qui est espacée à l'intérieur et à distance de la première extrémité (150) de l'alésage d'air (140) pour former un premier espace (158), et dans lequel, dans au moins certaines positions rotatives de la soupape à air (116), le déflecteur (118) retarde le débit d'air à travers l'alésage d'air (140) en autorisant le débit d'air à travers le premier espace (158).

6. Carburateur (10) selon la revendication 1, dans lequel le déflecteur (218) définit une ou plusieurs découpes (262, 264) dans la périphérie du déflecteur (218), et dans lequel, dans au moins certaines positions rotatives de la soupape à air (16 ; 116 ; 416 ; 516), le déflecteur (218) retarde le débit d'air à travers l'alésage d'air (40 ; 140 ; 440) en autorisant le débit d'air à travers ladite une ou plusieurs découpes (262, 264).

7. Carburateur (10) selon la revendication 6, dans lequel le déflecteur (218) présente une première extrémité (254) définissant une première découpe (262), et une seconde extrémité (256) située à l'opposé de la première extrémité (254) définissant une seconde découpe (264).

8. Carburateur (10) selon la revendication 1, dans lequel le déflecteur (318) définit une ou plusieurs ouvertures (366, 368) à travers le déflecteur (318) et qui sont liées par le déflecteur (318), et dans lequel, dans au moins certaines positions rotatives de la soupape à air (16 ; 116 ; 416 ; 516), le déflecteur (318) retarde le débit d'air à travers l'alésage d'air (40 ; 140 ; 440) en autorisant le débit d'air à travers ladite une ou plusieurs ouvertures (366, 368).

9. Carburateur (10) selon la revendication 1, dans lequel le déflecteur (618) comprend un ou plusieurs vides (690) formés dans le déflecteur (618), et dans lequel, dans au moins certaines positions rotatives de la soupape à air (16 ; 116 ; 416 ; 516), le déflecteur (618) retarde le débit d'air à travers l'alésage d'air (40 ; 140 ; 440) en autorisant le débit d'air à travers ledit un ou plusieurs vides (690).

10. Carburateur (10) selon la revendication 1, comprenant en outre au moins une rainure (472, 474) formée dans l'alésage d'air (440) de la soupape à air (416), et dans lequel le déflecteur (418) est reçu dans ladite au moins une rainure (472, 474) devant être placée dans l'alésage d'air (440).
